# EUROPEAN PATENT APPLICATION

(11) **EP 4 514 062 A1**
(43) Date of publication of application: **26.02.2025**
(21) Application number: 23791283.7
(22) Date of filing: 19.04.2023
(51) Int. Cl.: H04W 84/18, H04W 74/00

(54) **INFORMATION RECEIVING METHOD, INFORMATION SENDING METHOD AND APPARATUSES, AND READABLE STORAGE MEDIUM**

(30) Priority: 20.04.2022 CN 202210419061
(71) Applicant: Datang Mobile Communications Equipment Co., Ltd., Beijing 100085 (CN)
(72) Inventor: YANG, Meiying, Beijing 100085 (CN); CHENG, Fangchen, Beijing 100085 (CN); CHEN, Li, Beijing 100085 (CN); WANG, Jiaqing, Beijing 100085 (CN); ZHANG, Yinghao, Beijing 100085 (CN)
(74) Representative: Studio Torta S.p.A.
(86) International application number: PCT/CN2023/089261
(87) International publication number: WO 2023/202628

(57) **Abstract**

The present disclosure relates to the technical field of communications, and discloses an information receiving method, an information sending method, and apparatuses, and a readable storage medium, so as to solve the problem of poor information interaction flexibility between access nodes. The method comprises: a first access node receives a reference signal which carries second information and which is sent by a second access node, the second information comprising a node identifier and node information of the second access node; and the first access node interacts with the second access node according to the second information.

## Description

### CROSS-REFERENCE TO RELATED APPLICATION

This disclosure claims the priority of Chinese Patent Application No. 202210419061.6 filed in China on April 20, 2022, the disclosures of which are hereby incorporated by reference in its entirety.

### TECHNICAL FIELD

The present disclosure relates to the field of communications technologies, and in particular, to an information receiving method, an information transmitting method, an information receiving apparatus, an information transmitting apparatus and a readable storage medium.

### BACKGROUND

When designing a communication network architecture in the related art, a base station is usually a central control node, and a terminal performs a corresponding operation by receiving an instruction from a base station, wherein the operation includes cell access, resource scheduling, and the like. A primary purpose of the cell access is as follows: 1) establishing uplink synchronization; 2) establishing a unique terminal identifier, such as a Cell Radio Network Temporary Identifier (C-RNTI), and requesting the network to allocate uplink resources to the terminal. Therefore, cell access is used not only for initialization access, but also for accessing a new cell during handover, access after radio link failure, uplink synchronization re-recovery and an uplink shared channel (UL-SCH) resource request during uplink/downlink data transmission, and the like. The resource scheduling includes that the terminal applies resources for new data transmission to the network side. A scheduling request (SR) belongs to information at a physical layer, and a user equipment (UE) transmits a SR without a resource block (RB) resource, and the SR is transmitted through a physical uplink control channel (PUCCH). After successfully decoding the SR signal of a certain terminal, the network side may allocate RB resources to the terminal through downlink control indication 0 (DCI 0), or may not allocate RB resources to the terminal, and the terminal should not assume the result of the allocation of the network side. In many cases, in order to obtain an uplink RB resource, the terminal needs to transmit the SR application for multiple times.

The interaction manner in the process of accessing the base station by the terminal is not flexible enough. With the increasing development of science and technology, more and more mobile terminals (including mobile phone terminals or other machine devices), especially high-speed mobile terminals, may need to obtain services through frequent access which has increasingly affected the access performance and the user experience of the terminal.

### SUMMARY

Embodiments of the present disclosure provide an information receiving method and apparatus, an information transmitting method and apparatus, and a readable storage medium, to resolve a problem of poor flexibility of information interaction between access nodes.

In a first aspect, an information receiving method for an access node is provided. The method includes: receiving, by a first access node, a reference signal carrying second information from the second access node, wherein the second information includes a node identifier and node information of the second access node; interacting with the second access node by the first access node based on the second information.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, interacting with the second access node by the first access node based on the second information includes at least one of following: discovering, by the first access node, the second access node based on the second information; accessing, by the first access node, the second access node based on the second information; performing, by the first access node, scheduling interaction with the second access node based on the second information.

Optionally, the discovering, by the first access node, the second access node based on the second information includes: selecting, by the first access node, the second access node whose second information meets a first condition as the discovered second access node.

Optionally, the first condition includes at least one of following: that the node type of the second access node satisfies a first node type; that the service information of the second access node satisfies a first service information threshold; that the resource information of the second access node satisfies a first resource information threshold; that the transmit power of the second access node satisfies a first transmit power threshold; that the bandwidth configuration of the second access node satisfies a first bandwidth configuration threshold; that the communication mode of the second access node satisfies a first communication mode; that the type of the reference signal supported by the second access node satisfies a first reference signal type; that the multiple access mode of the second access node satisfies a first multiple access mode; that the synchronization information of the second access node satisfies a first synchronization threshold; that the timing information of the second access node satisfies a first timing threshold; that the positioning information of the second access node satisfies a first positioning threshold; that the channel measurement information of the second access node satisfies a first measurement information threshold.

Optionally, the accessing, by the first access node, the second access node based on the second information includes: selecting, by the first access node, the second access node whose second information meets a second condition as a target access node; accessing the target access node by the first access node.

Optionally, the second condition includes at least one of following: that the node type of the second access node satisfies a second node type; that the service information of the second access node satisfies a second service information threshold; that the resource information of the second access node satisfies a second resource information threshold; that the transmit power of the second access node satisfies a second transmit power threshold; that the bandwidth configuration of the second access node meets a second bandwidth configuration threshold; that the communication mode of the second access node satisfies a second communication mode; that the type of a reference signal supported by the second access node satisfies a second reference signal type; that the multiple access mode of the second access node satisfies a second multiple access mode; that the synchronization information of the second access node satisfies a second synchronization threshold; that the timing information of the second access node satisfies a second timing threshold; that the positioning information of the second access node satisfies a second positioning threshold; that the channel measurement information of the second access node satisfies a second measurement information threshold.

Optionally, the resource information of the second access node includes access resource information used to transmit the access information and the access acknowledge information, and the access resource information includes at least one of following: time domain resource information of initiating random access, frequency domain resource information of initiating random access, spatial domain resource information of initiating random access, code domain resource information of initiating random access, and an access identifier of initiating the random access; wherein accessing the target access node by the first access node includes: transmitting, by the first access node, first access information of the first access node based on access resource information of the target access node, wherein the first access information includes at least one of the access identifier, a node type, a node identifier, and synchronization information of the first access node; receiving, by the first access node, first access acknowledgement information from the target access node based on the access resource information of the target access node.

Optionally, the accessing the target access node by the first access node includes: transmitting, by the first access node, a reference signal carrying a first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node; receiving, by the first access node, a reference signal carrying second access acknowledgement information from the target access node.

Optionally, the performing, by the first access node, scheduling interaction with the second access node based on the second information includes: transmitting, by the first access node, scheduling request information and receiving scheduling request acknowledgement information based on the second information.

Optionally, resource information of the second access node includes: scheduling request resource information used transmit the scheduling request information and the scheduling request acknowledgement information; the transmitting, by the first access node, the scheduling request information and receiving the scheduling request acknowledgement information based on the second information includes: obtaining, by the first access node, scheduling request resource information from a reference signal from the second access node, and transmitting the scheduling request information based on the obtained scheduling request resource information; receiving, by the first access node, the scheduling request acknowledgement information from the second access node based on the obtained scheduling request resource information.

Optionally, the transmitting, by the first access node, scheduling request information and receiving scheduling request acknowledgement information based on the second information includes: transmitting, by the first access node, the scheduling request information through a reference signal; receiving, by the first access node, the scheduling request acknowledgement information from the second access node through a reference signal.

Optionally, the scheduling request acknowledgment information is indicated in an explicit manner or an implicit manner, wherein the explicit manner is that the reference signal carries the scheduling request acknowledgment information; the implicit manner is that the reference signal carries a resource identifier and/or a scheduling identifier used to receive the scheduling request acknowledgement information, and the first access node receives the scheduling request acknowledgment information according to the resource identifier and/or the scheduling identifier used to receive the scheduling request acknowledgement information.

Optionally, the scheduling request information includes at least one of following: a scheduling type, including at least one of data and signaling; a type of a service, including an index of a QoS of a data packet; a size of scheduling, including at least one of a size of a to-be-transmitted data packet and a size of an expected scheduling resource.

In a second aspect, an information transmitting method for an access node is provided. The method includes: transmitting, by a second access node, a reference signal carrying second information, wherein the second information includes a node identifier and node information of the second access node.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, the method further includes: performing, by the second access node, access control on the first access node in response to access information from the first access node.

Optionally, the resource information of the second access node includes access resource information used to transmit the access information and the access acknowledgement information, and the access resource information includes at least one of following: time domain resource information of initiating a random access, frequency domain resource information of initiating a random access, spatial domain resource information of initiating a random access, code domain resource information of initiating a random access, and an access identifier of initiating the random access; the performing, by the second access node, access control on the first access node in response to the access information from the first access node includes: receiving, by the second access node, first access information from the first access node based on the access resource information of the second access node, wherein the first access information includes at least one of an access identifier, a node type, a node identifier, and synchronization information of the first access node; establishing, by the second access node, a connection with the first access node based on the first access information, and transmitting first access acknowledgement information to the first access node based on the access resource information of the second access node.

Optionally, the performing, by the second access node, access control on the first access node in response to the access information from the first access node includes: receiving, by the second access node, a reference signal carrying first information from the first access node, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node; establishing, by the second access node, a connection with the first access node based on the second access information, and transmitting a reference signal carrying second access acknowledgement information.

Optionally, the method includes: receiving, by the second access node, scheduling request information from the first access node, and transmitting scheduling request acknowledgement information to the first access node.

Optionally, the resource information of the second access node includes: scheduling request resource information; the receiving, by the second access node, scheduling request information from the first access node, and transmitting scheduling request acknowledgement information to the first access node includes: receiving, by the second access node, scheduling request information from the first access node based on the scheduling request resource information, and transmitting, by the second access node, the scheduling request acknowledgement information based on the scheduling request resource information.

Optionally, the receiving, by the second access node, scheduling request information from the first access node, and transmitting scheduling request acknowledgement information to the first access node includes: receiving, by the second access node, the scheduling request information from the first access node through a reference signal, and transmitting, by the second access node, the scheduling request acknowledgement information through a reference signal.

Optionally, the scheduling request acknowledgment information is indicated in an explicit manner or an implicit manner, wherein the explicit manner is that the reference signal carries the scheduling request acknowledgment information; the implicit manner is that the reference signal carries a resource identifier and/or a scheduling identifier used to receive the scheduling request acknowledgement information, and when the implicit manner is used, the second access node further transmits the scheduling request acknowledgment information based on the resource identifier and/or the scheduling identifier used to receive the scheduling request acknowledgement information.

Optionally, the scheduling request information includes at least one of following: a scheduling type, including at least one of data and signaling; a type of a service, including an index of a QoS of a data packet; a size of scheduling, including at least one of a size of a to-be-transmitted data packet and a size of an expected scheduling resource.

In a third aspect, an information receiving apparatus applied to a first access node is provided. The apparatus includes: a memory, a transceiver, and a processor, wherein the memory is configured to store a computer program; the transceiver is configured to transmit and receive data under the control of the processor; the processor is configured to read the computer program in the memory and perform following operations: receiving a reference signal carrying second information from a second access node, wherein the second information includes a node identifier and node information of the second access node; interacting with the second access node based on the second information.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, the processor is further configured to read the computer program in the memory and perform following operations: discovering the second access node based on the second information; accessing the second access node based on the second information; performing scheduling interaction with the second access node based on the second information.

Optionally, the processor is further configured to read the computer program in the memory and perform following operations: selecting the second access node whose second information meets a first condition as the discovered second access node.

Optionally, the processor is further configured to read the computer program in the memory and perform following operations: selecting the second access node whose second information meets a second condition as a target access node; accessing the target access node.

Optionally, the resource information of the second access node includes access resource information, and the access resource information includes at least one of following: time domain resource information of initiating a random access, frequency domain resource information of initiating a random access, spatial domain resource information of initiating a random access, code domain resource information of initiating a random access, and an access identifier of initiating a random access; the processor is further configured to read the computer program in the memory and perform following operations: transmitting first access information of the first access node based on the access resource information of the target access node, wherein the first access information includes at least one of an access identifier, a node type, a node identifier, and synchronization information of the first access node; receiving first access acknowledgement information from the target access node based on the access resource information of the target access node.

Optionally, the processor is further configured to read the computer program in the memory and perform following operations: transmitting a reference signal carrying first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node; receiving a reference signal carrying second access acknowledgement information from the target access node.

Optionally, the processor is further configured to read the computer program in the memory and perform following operations: transmitting scheduling request information and receiving scheduling request acknowledgement information based on the second information.

Optionally, the resource information of the second access node includes: scheduling request resource information; the processor is further configured to read the computer program in the memory and perform following operations: obtaining the scheduling request resource information from a reference signal from the second access node, and transmitting the scheduling request information based on the obtained scheduling request resource information; receiving the scheduling request acknowledgement information from the second access node based on the obtained scheduling request resource information.

Optionally, the processor is further configured to read the computer program in the memory and perform following operations: transmitting scheduling request information through a reference signal; receiving scheduling request acknowledgement information from the second access node through a reference signal.

Optionally, the scheduling request acknowledgement information is indicated in an explicit manner or an implicit manner, wherein the explicit manner is that the reference signal carries the scheduling request acknowledgement information, and the implicit manner is that the reference signal carries a resource identifier and/or a scheduling identifier used to receive the scheduling request acknowledgement information; in a case that the scheduling request acknowledgement information is indicated in the implicit manner, the processor is further configured to read the computer program in the memory and perform following operations: receiving the scheduling request acknowledgement information based on the resource identifier and/or the scheduling identifier used to receive the scheduling request acknowledgement information.

In a fourth aspect, an information transmitting apparatus is provided. The apparatus includes a memory, a transceiver, and a processor: wherein the memory is configured to store a computer program; the transceiver is configured to transmit and receive data under control of the processor; the processor is configured to read the computer program in the memory and perform following operations: transmitting a reference signal carrying second information, wherein the second information includes a node identifier and node information of the second access node.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, the processor is further configured to read the computer program in the memory and perform following operations: performing access control on the first access node in response to access information from the first access node, wherein the access information includes at least one of a node type, a node identifier, and synchronization information of the first access node.

Optionally, the resource information of the second access node includes access resource information used to transmit the access information and the access acknowledgement information, and the access resource information includes at least one of following: time domain resource information of initiating a random access, frequency domain resource information of initiating a random access, spatial domain resource information of initiating a random access, code domain resource information of initiating a random access, and an access identifier of initiating a random access; the processor is further configured to read the computer program in the memory and perform following operations: receiving first access information from the first access node based on access resource information of the second access node, wherein the first access information includes at least one of an access identifier, a node type, a node identifier, and synchronization information of the first access node; establishing a connection with the first access node based on the first access information, and transmitting first access acknowledgement information to the first access node based on the access resource information of the second access node.

Optionally, the processor is further configured to read the computer program in the memory and perform following operations: receiving a reference signal carrying first information from the first access node, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node; establishing a connection with the first access node based on the second access information, and transmitting a reference signal carrying second access acknowledgement information.

Optionally, the processor is further configured to read the computer program in the memory and perform following operations: receiving scheduling request information from the first access node, and transmitting scheduling request acknowledgement information to the first access node.

Optionally, the resource information of the second access node includes: scheduling request resource information used to transmit the scheduling request information and the scheduling request acknowledgement information; the processor is further configured to read the computer program in the memory and perform following operations: receiving scheduling request information from the first access node based on the scheduling request resource information, and transmitting the scheduling request acknowledgement information based on the scheduling request resource information.

Optionally, the processor is further configured to read the computer program in the memory and perform following operations: receiving the scheduling request information from the first access node through a reference signal, and transmitting the scheduling request acknowledgement information through a reference signal.

Optionally, the scheduling request acknowledgement information is indicated in an explicit manner or an implicit manner, wherein the explicit manner is that the reference signal carries the scheduling request acknowledgement information; the implicit manner is that the reference signal carries a resource identifier and/or a scheduling identifier used to receive the scheduling request acknowledgement information, and when the implicit manner is used, the processor is further configured to read the computer program in the memory and perform following operations: transmitting the scheduling request acknowledgement information based on the resource identifier and/or the scheduling identifier used to receive the scheduling request acknowledgement information.

In a fifth aspect, an information receiving apparatus applied to a first access node is provided. The apparatus includes: a first receiving module, configured to receive a reference signal carrying second information from a second access node, wherein the second information includes a node identifier and node information of the second access node; an interaction module, configured to interact with the second access node based on the second information.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, the interaction module is further configured to, when interacting with the second access node based on the second information, perform at least one of following: discovering the second access node based on the second information; accessing the second access node based on the second information; performing scheduling interaction with the second access node based on the second information.

Optionally, the interaction module includes: a discovery unit, configured to select the second access node whose second information meets a first condition as the discovered second access node.

Optionally, the first condition includes at least one of following: that the node type of the second access node satisfies a first node type; that the service information of the second access node satisfies a first service information threshold; that the resource information of the second access node satisfies a first resource information threshold; that the transmit power of the second access node satisfies a first transmit power threshold; that the bandwidth configuration of the second access node satisfies a first bandwidth configuration threshold; that the communication mode of the second access node satisfies a first communication mode; that the type of the reference signal supported by the second access node satisfies a first reference signal type; that the multiple access mode of the second access node satisfies a first multiple access mode; that the synchronization information of the second access node satisfies a first synchronization threshold; that the timing information of the second access node satisfies a first timing threshold; that the positioning information of the second access node satisfies a first positioning threshold; that the channel measurement information of the second access node satisfies a first measurement information threshold.

Optionally, the interaction module includes: an access unit, configured to select the second access node whose second information meets a second condition as a target access node; access the target access node.

Optionally, the second condition includes at least one of following: that the node type of the second access node satisfies a second node type; that the service information of the second access node satisfies a second service information threshold; that the resource information of the second access node satisfies a second resource information threshold; that the transmit power of the second access node satisfies a second transmit power threshold; that the bandwidth configuration of the second access node meets a second bandwidth configuration threshold; that the communication mode of the second access node satisfies a second communication mode; that the type of the reference signal supported by the second access node satisfies a second reference signal type; that the multiple access mode of the second access node satisfies a second multiple access mode; that synchronization information of the second access node satisfies a second synchronization threshold; that timing information of the second access node satisfies a second timing threshold; that the positioning information of the second access node satisfies a second positioning threshold; that the channel measurement information of the second access node satisfies a second measurement information threshold.

Optionally, the resource information of the second access node includes access resource information for transmitting access information and access acknowledgement information, and the access resource information includes at least one of following: time domain resource information of initiating a random access, frequency domain resource information of initiating a random access, spatial domain resource information of initiating a random access, code domain resource information of initiating a random access, and an access identifier of initiating a random access; the access unit is further configured to transmit first access information of the first access node based on the access resource information of the target access node, wherein the first access information includes at least one of an access identifier, a node type, a node identifier, and synchronization information of the first access node; and to receive first access acknowledgement information from the target access node based on the access resource information of the target access node.

Optionally, the access unit is further configured to transmit a reference signal carrying first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node; and to receive a reference signal carrying second access acknowledgement information from the target access node.

Optionally, the interaction module includes: a scheduling processing unit, configured to transmit scheduling request information and receive scheduling request acknowledgement information based on the second information, wherein the scheduling request information is configured to request a scheduling resource to transmit data and/or signaling, and the scheduling request acknowledgement information is configured to indicate the scheduling resource for transmitting the data and/or the signaling.

Optionally, the resource information of the second access node includes scheduling request resource information for transmitting scheduling request information and scheduling request acknowledgement information; the scheduling processing unit is further configured to obtain scheduling request resource information from a reference signal from the second access node, and transmit the scheduling request information based on the obtained scheduling request resource information; and receive the scheduling request acknowledgement information from the second access node based on the obtained scheduling request resource information.

Optionally, the scheduling processing unit is further configured to transmit the scheduling request information through a reference signal; receive the scheduling request acknowledgement information from the second access node through a reference signal.

Optionally, the scheduling request acknowledgement information is indicated in an explicit manner or an implicit manner, and the explicit manner is that the reference signal carries the scheduling request acknowledgement information; the implicit manner is that the reference signal carries a resource identifier and/or a scheduling identifier for receiving the scheduling request acknowledgment information, and the scheduling processing unit is further configured to receive the scheduling request acknowledgment information based on the resource identifier and/or the scheduling identifier for receiving the scheduling request acknowledgment information when the scheduling request acknowledgment information is indicated in the implicit manner.

Optionally, the scheduling request information includes at least one of following: a type of scheduling, including at least one of data and signaling; a type of a service, including an index of a QoS of a data packet; a size of scheduling, including at least one of a size of a to-be-transmitted data packet and a size of an expected scheduling resource.

In a sixth aspect, an information transmitting apparatus applied to a second access node is provided. The apparatus includes: a transmitting module, configured to transmit a reference signal carrying second information, wherein the second information includes a node identifier and node information of the second access node.

Optionally, the node information includes at least one of following: a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, and channel measurement information of the second access node.

Optionally, the apparatus further includes: an access processing unit, configured to perform access control on the first access node in response to access information from the first access node, wherein the access information includes at least one of a node type, a node identifier, and synchronization information of the first access node.

Optionally, the resource information of the second access node includes access resource information for transmitting access information and access acknowledgement information, and the access resource information includes at least one of following: time domain resource information of initiating a random access, frequency domain resource information of initiating a random access, spatial domain resource information of initiating a random access, code domain resource information of initiating a random access, and an access identifier of initiating a random access; the access processing unit is further configured to receive first access information from the first access node based on access resource information of the second access node, wherein the first access information includes at least one of the access identifier, a node type, a node identifier, and synchronization information of the first access node; establish a connection with the first access node based on the first access information, and transmit first access acknowledgement information to the first access node based on the access resource information of the second access node.

Optionally, the access processing unit is further configured to receive a reference signal carrying first information from the first access node, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node; establish a connection with the first access node based on the second access information, and transmit a reference signal carrying second access acknowledgement information.

Optionally, the apparatus further includes: a scheduling unit, configured to receive scheduling request information from the first access node, and transmit scheduling request acknowledgement information to the first access node, wherein the scheduling request information is configured to request a scheduling resource for transmitting data and/or signaling, and the scheduling request acknowledgement information is configured to indicate the scheduling resource for transmitting the data and/or the signaling.

Optionally, the resource information of the second access node includes: scheduling request resource information for transmitting scheduling request information and scheduling request acknowledgement information; the scheduling unit is further configured to receive the scheduling request information from the first access node based on the scheduling request resource information, and transmit, by the second access node, the scheduling request acknowledgement information based on the scheduling request resource information.

Optionally, the scheduling unit is further configured to receive scheduling request information from the first access node through a reference signal, and transmit, by the second access node, scheduling request acknowledgement information through a reference signal.

Optionally, the scheduling request acknowledgement information is indicated in an explicit manner or an implicit manner, and the explicit manner is that the reference signal carries the scheduling request acknowledgement information; the implicit manner is that the reference signal carries a resource identifier and/or a scheduling identifier for receiving the scheduling request acknowledgment information, and when the implicit manner is used, the scheduling unit further transmits the scheduling request acknowledgment information based on the resource identifier and/or the scheduling identifier for receiving the scheduling request acknowledgment information.

Optionally, the scheduling request information includes at least one of following: a type of scheduling, including at least one of data and signaling; a type of a service, including an index of a QoS of a data packet; a size of scheduling, including at least one of a size of a to-be-transmitted data packet and a size of an expected scheduling resource.

In a seventh aspect, a processor-readable storage medium is provided, wherein the processor-readable storage medium stores a computer program, and the computer program is configured to cause a processor to perform the method provided above.

In this embodiment of the present disclosure, the reference signal from the second access node carries the node information, so that the first access node may discover the second access node based on the node information of the second access node, or access the second access node, or perform a resource scheduling interaction process with the second access node. Since the node information is directly carried in the reference signal, and the node information does not need to be transmitted after the access process is completed, the embodiments of the present disclosure can improve the flexibility of information interaction between access nodes.

### BRIEF DESCRIPTION OF THE DRAWINGS

FIG. 1 is a schematic diagram of an application scenario according to an embodiment of the present disclosure;
FIG. 2 is a flowchart of an information receiving method according to an embodiment of the present disclosure;
FIG. 3 is a schematic diagram of a composition structure of a reference signal according to an embodiment of the present disclosure;
FIG. 4 is a flowchart of an information transmitting method according to an embodiment of the present disclosure;
FIG. 5 is a first structural diagram of an information receiving apparatus according to an embodiment of the present disclosure;
FIG. 6 is a first structural diagram of an information transmitting apparatus according to an embodiment of the present disclosure;
FIG. 7 is a second structural diagram of an information receiving apparatus according to an embodiment of the present disclosure;
FIG. 8 is a second structural diagram of an information transmitting apparatus according to an embodiment of the present disclosure.

### DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In an uplink random access procedure of a Long Term Evolution (LTE) system, a non-synchronous access mode is adopted, that is, when the terminal has not obtained uplink time synchronization or has lost synchronization, the process of estimating and adjusting the UE uplink transmission clock is performed by the base station (the next generation Node B, gNodeB), and the process is also used by the UE to request resource allocation from the gNodeB. The gNodeB responds to the UE's non-synchronous random access attempt, transmits time information to the UE to adjust the uplink transmission timing, and allocates uplink resources for the transmitted data or control signaling, and the timing information and the uplink data resource allocation may also be combined together to be transmitted to the UE. The random access procedure has two modes: (1) contention-based random access; (2) contention-free random access. There are 64 available preamble sequences in each cell, and for a contention-based random access procedure, the UE randomly selects a preamble sequence to initiate a random access procedure to the network side, so if multiple UEs use the same preamble sequence to initiate a random access procedure at the same time, a conflict may occur, and access failure may be caused. However, contention-free random access uses the preamble sequence allocated by the gNodeB to initiate a random access process, so that the access success rate is relatively high. However, considering that only in two scenarios of handover or downlink data transmission, the gNodeB can know in advance that the UE needs to initiate a random access process, so that contention-free random access can be used only in the two scenarios, and for other application scenarios, only contention-based random access can be used.

Similar to LTE, random access in a New Radio (NR) system is also divided into two types, contention based Random Access (CBRA), and Contention Free Random Access (CFRA) based on contention.

Further, with regard to the scheduling request information, when the UE triggers a scheduling request (SR), the SR is in a pending state, indicating that the UE is ready but does not transmit the SR to the network side. When the UE has assembled a Media Access Control Protocol Data Unit (MAC PDU), and the PDU includes a buffer status report (BSR) control unit triggered most recently, or a resource provided by the uplink grant may accommodate all data to be transmitted, Then the SR in the pending state will be cancelled, and the prohibit timer sr-ProhibitTimer will also be stopped. In other words, if the BSR has been prepared or the resource block (RB) resource is sufficient, it is not necessary to apply the resource through the SR again.

In the related art, there is no solution of an access node in a mobile-based flexible network structure, for example, how to access a network for a mobile access node, or is not further discussed.

In the related art, related information is obtained through an interaction process of a plurality of pieces of information, a large network delay may be brought, especially for a flexible cell (for example, a cell of a mobile base station), high-speed movement of the terminal and the base station may cause frequent switching and a large amount of interaction processes, or even a large signaling storm, which further causes network congestion.

Based on this, the embodiments of the present disclosure provide an information receiving method and apparatus, an information transmitting method and apparatus, and a readable storage medium, which are used for solving the problem of poor information interaction flexibility between access nodes, and improving the flexibility of information interaction between access nodes.

The method and the apparatus are based on the same application concept, and because the method and the apparatus solve a similar principle of a problem, the implementation of the apparatus and the method may refer to each other, and details are not described herein again.

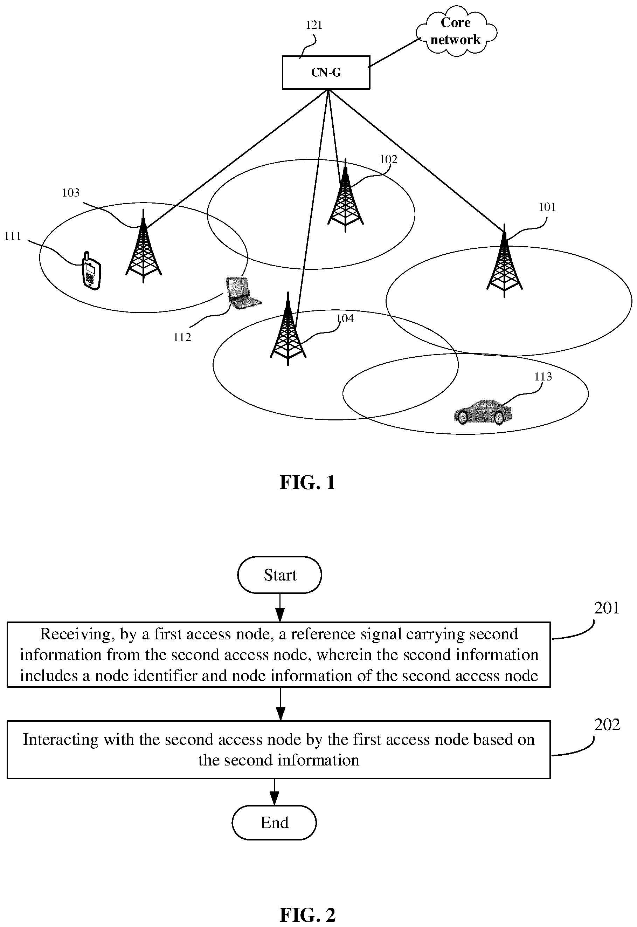

FIG. 1 provides a schematic diagram of an application scenario according to an embodiment of the present disclosure, and FIG. 1 includes a plurality of base stations 101-104 and a plurality of terminals 111-113, such as an automobile, a smartphone, a core network gateway (CN-G) 121, and a core network. In this embodiment of the present disclosure, the access node (including the first access node and the second access node below) may be a wireless access point. Here, the wireless access point may be a wireless connection point which starts an end-to-end communication. The wireless access point includes at least one of following: a base station and a terminal. For example, the access node may be one or more of the base stations 101-104 and the terminals 111-113 in FIG. 1. The base station may further include at least one of following: a macro station, a small station, and a home base station. The base station in the embodiments of the present disclosure may be stationary or mobile. For example, the mobile base station may be specifically deployed on at least one of an automobile, a train, an airplane, a ship, or the like. In some scenarios, the access node in the embodiments of the present disclosure may be an activated wireless access point.

Referring to FIG. 2, FIG. 2 is a flowchart of an information receiving method for an access node according to an embodiment of the present disclosure, as shown in FIG. 2, including the following steps:
Step 201: a first access node receives a reference signal carrying second information from the second access node, wherein the second information includes a node identifier and node information of the second access node.

In the embodiments of the present disclosure, the reference signal may be a periodic signal and/or an aperiodic signal. The node information of the second access node includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

For example, the node type of the access node may include at least one of following: a base station and a terminal. The base station may also be divided into fixed base stations with unchanged positions and mobile base stations with variable positions, and the terminals may also be classified into Internet of Things (Internet of Things, IoT) devices, machine types of devices, and the like.

The service information of the access node includes at least one of following: a service type, a load of the access node, load balancing of the access node, and the like. The service type may include at least one of following: a broadcast service, a Vehicle to Everything (V2X) service, an Extended Reliability (XR) service, an Ultra-Reliable and Low Latency Communications (URLLC) service, a File Transfer Protocol (FTP) service, Instant Messaging (IM) services, Voice over Internet Protocol (Voice over Internet Protocol, VoIP) services, etc.

The resource information of the access node may include at least one of following: time domain resource information, frequency domain resource information, code domain resource information, and spatial domain resource information. Each of the foregoing resource information may further include configured resource information, used resource information, and available resource information. For example, the frequency domain resource information may include configured frequency information, used frequency information, and frequency information that may be used. The frequency information may include center frequency information, a frequency range, a frequency identifier, and a frequency band identifier. The resource indicated by the resource information may be used to transmit different information, for example, when the resource information is used to transmit the access information and the access acknowledgement information, the resource information may be referred to as access resource information, or, when the resource information is used to transmit the scheduling request information and the scheduling request acknowledgement information, the resource information may be referred to as scheduling request resource information.

The communication mode of the access node may include at least one of following: half-duplex and full-duplex.

The type of the reference signal supported by the access node may include at least one of following: a synchronization reference signal, a time-frequency tracking reference signal, a phase adjustment reference signal, a channel state reference signal, and a broadcast reference signal.

The multiple access of the access node may include at least one of following: Time Division Duplex (TDD), Frequency Division Duplex (FDD), Cyclic Delay Diversity (CDD), Time Domain Multiple Access, Frequency Domain Multiple Access, and Code Domain Multiple Access.

The synchronization information of the access node may include at least one of following: coarse synchronization information, fine synchronization information, time domain tracking information, frequency domain tracking information, and phase tracking information. The coarse synchronization information includes synchronization of a first-level granularity, for example, synchronization of a first-level time domain granularity and/or synchronization of a first-level frequency domain granularity, and the fine synchronization information includes synchronization of a second-level granularity, for example, synchronization of a second-level time domain granularity and/or synchronization of a second-level frequency domain granularity. The granularity includes at least one of a time domain granularity and a frequency domain granularity. For example, the first-level time domain granularity may be at least one of a symbol level, a slot level, and a subframe level; the second-level time domain granularity may be at least one of a subframe level and a radio frame level. The first-level frequency domain granularity may be at least one of a resource unit and a resource block. The second-level frequency domain granularity may be an absolute frequency domain position, for example, an offset relative to a center frequency.

The timing information of the access node may include at least one of following: radio frame synchronization information, radio frame timing information, subframe synchronization information, subframe timing information, slot synchronization information, slot timing information, symbol synchronization information, and symbol timing information.

The positioning information of the access node may include at least one of following: location information, including geographic information and information about the base station to which the access node belongs.

The channel measurement information of the access node may include at least one of following: a long-term statistical characteristic of the channel and a short-term change characteristic of the channel; the long-term statistical characteristic of the channel includes at least one of: path loss, shadow fading, penetration loss, human body loss, wall loss, antenna radiation loss, and antenna polarization loss; the short-term change characteristic of the channel includes at least one of following: channel small-scale fading, time domain extension, angle extension, frequency domain extension, and antenna radiation power.

Step 202: the first access node interacts with the second access node based on the second information.

Here, the first access node of the embodiments of the present disclosure may perform at least one of following interactions based on the second information:
(1) the first access node discovers the second access node based on the second information;
(2) the first access node accesses the second access node based on the second information;
(3) the first access node performs scheduling interaction with the second access node based on the second information.

In the foregoing three interactions, the first access node may sequentially discover and access the second access node through the first type of interaction and the second type of interaction, and then obtain the scheduling resource for information transmission through the third type of interaction. Certainly, in this embodiment of the present disclosure, the first access node may optionally perform only one of the foregoing three interactions, to implement at least one of discovery, access, or scheduling.

Through the foregoing steps, the reference signal from the second access node in this embodiment of the present disclosure carries the node information, so that the first access node may discover the second access node based on the node information of the second access node, or access the second access node, or perform a resource scheduling interaction process with the second access node. Since the node information is directly carried in the reference signal, and the node information does not need to be transmitted after the access process is completed, the embodiments of the present disclosure can improve the flexibility of information interaction between access nodes. For example, the embodiments of the present disclosure may implement a flexible access network of the access node, thereby improving the service experience of the user, and through a flexible access scheme of the access node, connection between the access node and other access nodes may be quickly established, thereby transmitting data and information. In addition, the embodiment of the present disclosure can effectively reduce the transmission delay and reduce the signaling storm through the access scheme of the flexible access network of the access node.

In the embodiments of the present disclosure, the reference signal may include: a reference signal based on a sequence, and/or a signaling-based reference signal. The sequence may include at least one of following: a random sequence, a pseudo-random sequence, and a computer sequence. The composition content of the reference signal may include at least one piece of information and/or at least one sequence. For the reference signal from the second access node, the second information is carried in the reference signal. The second information may include a complete identifier or a partial identifier of the node identifier of the second access node. For example, the complete node identifier of the second access node includes a multi-level identifier, and can be used to uniquely identify the second access node in the first area. In an actual application, if the second access node is only in the first sub-region in the first region, only partial identifier of the multi-level identifiers may be used, as long as the partial identifier can uniquely identify the second access node in the first sub-region.

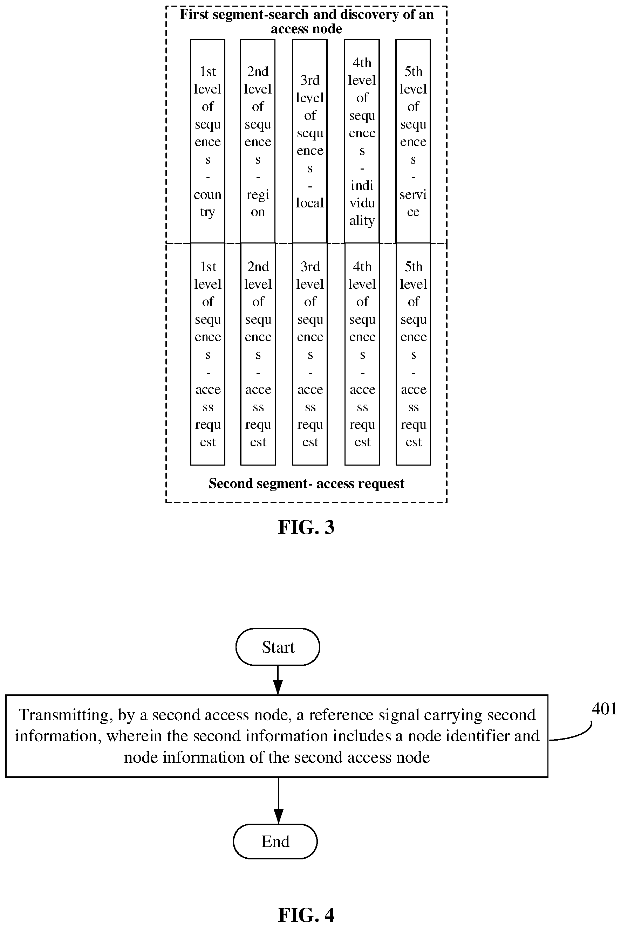

FIG. 3 shows an example of a reference signal in an embodiment of the present disclosure, including: a first segment for search and discovery of the access node, and a second segment for carrying an access request. Each segment may in turn comprise a 5-level sequence. For example, in the first segment, a unique access node and a service thereof are identified by using a 5-level sequence, and if the access node is indicated only in the local area, the first-level sequence and the second-level sequence of the first segment may be null, that is, only the third, fourth, and fifth-level sequences are included.

The following separately describes the three types of interactions above.
(1) The first access node detects and discovers at least one second access node.

The first access node receives the reference signal that is transmitted by the at least one second access node and carries the second information, to obtain the second information of each second access node. Then, the first access node selects the second access node whose second information meets the first condition as the discovered second access node.

Specifically, the first condition includes at least one of following:
1. The node type of the second access node satisfies the first node type.
   For example, the first node type may be a mobile base station. In a case that a node type of the second access node is a mobile base station, the first access node may add the second access node to a list of discovered second access nodes.
2. The service information of the second access node satisfies the first service information threshold.
   For example, the first service information threshold may be a first load threshold of the second access node. In a case that a load of the second access node is less than the first load threshold, the first access node may add the second access node to a list of discovered second access nodes.
3. The resource information of the second access node satisfies the first resource information threshold.
   For example, the first resource information threshold may be a first frequency domain resource threshold of an available frequency. In a case that the available frequency of the second access node is greater than the first frequency domain resource threshold, the first access node may add the second access node to a list of discovered second access nodes.
4. The transmit power of the second access node meets the first transmit power threshold.
   For example, the first transmit power threshold may be a first power threshold. In a case that the transmit power of the second access node is greater than the first power threshold, the first access node may add the second access node to a list of discovered second access nodes.
5. The bandwidth configuration of the second access node meets the first bandwidth configuration threshold.
   For example, the first bandwidth configuration threshold may be a first bandwidth threshold of a downlink bandwidth. In a case that the downlink bandwidth of the second access node is greater than the first bandwidth threshold, the first access node may add the second access node to a list of discovered second access nodes.
6. The communication mode of the second access node satisfies the first communication mode.
   For example, the first communication mode may be full duplex. In a case that a communication mode of the second access node is full-duplex, the first access node may add the second access node to a list of discovered second access nodes.
7. The type of the reference signal supported by the second access node satisfies the first reference signal type.
   For example, the first reference signal type may be a synchronization reference signal. In a case that the type of the reference signal of the second access node is a synchronization reference signal, the first access node may add the second access node to a list of discovered second access nodes.
8. The multiple access mode of the second access node meets the first multiple access mode.
   For example, the first multiple access manner may be FDD. In a case that the multiple access mode of the second access node is FDD, the first access node may add the second access node to a list of discovered second access nodes.
9. The synchronization information of the second access node satisfies the first synchronization threshold.
   For example, the first synchronization threshold may be time domain granularity in which the fine synchronization information is a subframe level. In a case that the time domain granularity of the fine synchronization information of the second access node is a subframe level, the first access node may add the second access node to a list of discovered second access nodes.
10. The timing information of the second access node satisfies the first timing threshold.
   For example, the first timing threshold may be subframe timing information. In a case that the timing information of the second access node is subframe timing information, the first access node may add the second access node to a list of discovered second access nodes.
11. The positioning information of the second access node satisfies the first positioning threshold.
   For example, the first positioning threshold may be a preset first geographic location area. In a case that the positioning information of the second access node is in the first geographic location area, the first access node may add the second access node to a list of discovered second access nodes.
12. the channel measurement information of the second access node satisfies the first measurement information threshold.

For example, the first measurement information threshold may be a first loss of antenna radiation loss. In a case that the antenna radiation loss of the second access node is less than the first loss, the first access node may add the second access node to a list of discovered second access nodes.

Here, a certain threshold may be satisfied, which may be greater than the threshold, equal to the threshold, less than the threshold, or within the range indicated by the threshold. For example, the service information of the access node satisfies the first service information threshold, which may be that the load of the access node is less than the first load threshold. For another example, when the first transmit power threshold is a certain power interval, the transmit power of the access node satisfies the first transmit power threshold, which means that the transmit power of the access node is in the power interval.

It should be noted that the case in which the first condition is satisfied is exemplified above only by taking one of the first conditions as an example, and in the embodiments of the present disclosure, multiple items in the first condition may also be used to determine whether the first condition is met, that is, only if the multiple items meet the corresponding condition, it is determined that the first condition is met. For example, the first condition may include a first node type and a first load threshold of the second access node. In this case, only when a certain second access node is the mobile base station and the available frequency is greater than the first frequency domain resource threshold, the first access node adds the second access node to the list of the discovered second access node.

After discovering the second access node, the first access node may access the second access node, or may not perform the access procedure, which is not specifically limited in the embodiments of the present disclosure.

### (2) The first access node accesses at least one second access node

The first access node receives the reference signal that is transmitted by the at least one second access node and carries the second information, to obtain the second information of each second access node. Then, the first access node selects the second access node whose second information meets a second condition as a target access node; then, the first access node accesses the target access node.

Herein, the second condition includes at least one of following:
1. The node type of the second access node satisfies the second node type.
   For example, the second node type may be a mobile base station. In a case that a node type of the second access node is a mobile base station, the first access node may add the second access node to a list of discovered second access nodes.
2. The service information of the second access node satisfies the second service information threshold.
   For example, the second service information threshold may be a second load threshold of the second access node. In a case that a load of the second access node is less than the second load threshold, the first access node may add the second access node to a list of discovered second access nodes.
3. The resource information of the second access node satisfies the second resource information threshold.
   For example, the second resource information threshold may be a second frequency domain resource threshold of the available frequency. In a case that the available frequency of the second access node is greater than the second frequency domain resource threshold, the first access node may add the second access node to a list of discovered second access nodes.
4. The transmit power of the second access node satisfies the second transmit power threshold.
   For example, the second transmit power threshold may be a second power threshold. In a case that the transmit power of the second access node is greater than the second power threshold, the first access node may add the second access node to a list of discovered second access nodes.
5. The bandwidth configuration of the second access node meets the second bandwidth configuration threshold.
   For example, the second bandwidth configuration threshold may be a second bandwidth threshold of the downlink bandwidth. In a case that the downlink bandwidth of the second access node is greater than the second bandwidth threshold, the first access node may add the second access node to a list of discovered second access nodes.
6. A communication mode of the second access node satisfies a second communication mode.
   For example, the second communication mode may be full duplex. In a case that a communication mode of a certain second access node is full-duplex, the first access node may add the second access node to a list of discovered second access nodes.
7. The type of the reference signal supported by the second access node satisfies the second reference signal type.
   For example, the second reference signal type may be a synchronization reference signal. In a case that the type of the reference signal of the second access node is a synchronization reference signal, the first access node may add the second access node to a list of discovered second access nodes.
8. The multiple access mode of the second access node meets the second multiple access mode. For example, the second multiple access manner may be FDD. In a case that the multiple access mode of a certain second access node is FDD, the first access node may add the second access node to a list of discovered second access nodes.
9. The synchronization information of the second access node satisfies the second synchronization threshold.
   For example, the second synchronization threshold may be time domain granularity in which the fine synchronization information is a subframe level. In a case that the time domain granularity of the fine synchronization information of the second access node is a subframe level, the first access node may add the second access node to a list of discovered second access nodes.
10. The timing information of the second access node satisfies the second timing threshold.
   For example, the second timing threshold may be subframe timing information. In a case that the timing information of the second access node is subframe timing information, the first access node may add the second access node to a list of discovered second access nodes.
11. The positioning information of the second access node satisfies the second positioning threshold.
   For example, the second positioning threshold may be a preset second geographical location area. In a case that the positioning information of a certain second access node is in the second geographic location area, the first access node may add the second access node to a list of discovered second access nodes.
12. The channel measurement information of the second access node satisfies the second measurement information threshold.

For example, the second measurement information threshold may be a second loss of antenna radiation loss. In a case that the antenna radiation loss of the second access node is less than the second loss, the first access node may add the second access node to a list of discovered second access nodes.

Similarly, satisfying a certain threshold may be a case of being greater than the threshold, a case of being equal to the threshold, a case of being less than the threshold, or a case of being within the range indicated by the threshold.

It should be noted that, for example, only one of the second conditions is taken as an example to describe the situation that the first condition is met, in this embodiment of the present disclosure, multiple items in the second condition may also be used to determine whether the second condition is met, that is, only if the multiple items meet the corresponding conditions, it is determined that the second condition is met. For example, the second condition may include a second node type and a second load threshold for the second access node. In this case, in a case that the second access node is a mobile base station and an available frequency is greater than the second frequency domain resource threshold, the first access node adds the second access node to a list of discovered second access nodes.

In this embodiment of the present disclosure, the first access node may access the target access node in a plurality of manners, which are illustrated below.

In an optional implementation, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access. The first access node may transmit first access information of the first access node based on access resource information of the target access node, wherein the first access information includes at least one of the access identifier, a node type, a node identifier, and synchronization information of the first access node. Then, the first access node receives the first access acknowledgement information from the target access node based on the access resource information of the target access node. The first access acknowledgement information may carry at least one of following information: the access identifier and a node identifier of the first access node. In this implementation, the first access node transmits the first access information and receives the first access acknowledgement information by using the resource indicated by the access resource information in the reference signal, to complete the access process.

In another optional implementation, the first access node may transmit a reference signal carrying first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node. Then, the first access node receives a reference signal carrying second access acknowledgement information from the target access node. The second access acknowledgement information may carry a node identifier of the first access node. In this implementation, the first access node transmits the second access information by using the reference signal, and receives the second access acknowledgement information from the second access node by using the reference signal, to complete the access process.

It should be noted that, after discovering the second access node, the embodiment of the present disclosure may perform the foregoing access step, that is, the first access node receives the reference signal that is transmitted by the discovered second access node and carries the second information, to obtain the second information of each discovered second access node. Then, the first access node selects, from the discovered access nodes, the second access node whose second information meets a second condition as a target access node; then, the first access node accesses the target access node. Certainly, the embodiments of the present disclosure may also directly access the second access node without the foregoing discovery process.

### (3) The first access node performs scheduling interaction with the second access node

The first access node transmits the scheduling request information and receives the scheduling request acknowledgement information from the second access node based on the second information in the reference signal received from the second access node. The scheduling request information is used to request scheduling resources to transmit data and/or signaling. The scheduling request acknowledgement information is used to indicate a scheduling resource for transmitting the data and/or signaling.

In an embodiment of the present disclosure, the scheduling request information includes at least one of following:
1. the type of the scheduling, including at least one of data and signaling;
2. the type of the service, including a Quality of Service (QoS) index of the data packet;
3. the size of the scheduling, including at least one of a size of the to-be-transmitted data packet and a size of the expected scheduling resource.

Specifically, the scheduling resource may be at least one of a declared resource, a configuration resource, an actually available resource, and an activated resource of the second access node. The declared resource includes a maximum supported resource configuration of the second access node. The configuration resource includes a resource configuration of the second access node configured by the network. The actually available resource includes a resource configuration that can be used by the data transmission of the second access node. The activated resource includes all or part of resource configurations that can be used in the second access node.

Specifically, in this embodiment of the present disclosure, the first access node may perform the foregoing scheduling process in a plurality of manners, which are illustrated below.

In an optional implementation, the resource information of the second access node includes scheduling request resource information for transmitting scheduling request information and scheduling request acknowledgement information. The first access node may obtain the scheduling request resource information from the reference signal from the second access node, and transmit the scheduling request information based on the obtained scheduling request resource information, and then the first access node receives the scheduling request acknowledgment information from the second access node based on the obtained scheduling request resource information, to obtain the scheduling request acknowledgment information. In this implementation, the first access node transmits the scheduling request information and receives scheduling request acknowledgement information by using the resource indicated by the scheduling request resource information, so as to complete the scheduling process, and obtain the scheduling resource indicated by the second access node and used for transmitting data and/or signaling.

In another optional implementation, the first access node transmits scheduling request information through the reference signal, and receives scheduling request acknowledgement information from the second access node through the reference signal. In this implementation, the first access node transmits the scheduling request information by using the reference signal, and receives the scheduling request acknowledgment information from the second access node by using the reference signal, to complete the scheduling process, to obtain the scheduling resource indicated by the second access node and used to transmit data and/or signaling.

When the scheduling request acknowledgement information is transmitted through the reference signal, the scheduling request acknowledgement information may be indicated in an explicit manner or an implicit manner, wherein the explicit manner is that the reference signal carries the scheduling request acknowledgement information, and at this time, the scheduling request acknowledgement information may be directly obtained from the reference signal. The implicit manner is that the reference signal carries a resource identifier and/or a scheduling identifier for receiving scheduling request acknowledgment information, and the first access node receives the scheduling request acknowledgment information according to the resource identifier and/or the scheduling identifier for receiving the scheduling request acknowledgment information.

In this embodiment of the present disclosure, the access request information may be specifically a Random Access Channel (RACH) request, and is used by the first access node to request to access the network. The scheduling request is a request used to schedule a resource for transmitting at least one of signaling and data.

Referring to FIG. 4, FIG. 4 is a flowchart of an information receiving method for an access node according to an embodiment of the present disclosure, as shown in FIG. 4, including the following steps:
Step 401: a second access node transmits a reference signal carrying second information, wherein the second information includes a node identifier and node information of the second access node.

Here, the node information includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

Through the foregoing steps, the second access node transmits the reference information, so that the first access node can interact with the second access node based on the second information, because the embodiment of the present disclosure enables the node information to be carried directly in the reference signal, and does not need to transmit the node information after the access process is completed, the embodiments of the present disclosure can improve the flexibility of information interaction between access nodes.

In this embodiment of the present disclosure, the second access node may further perform access control on the first access node in response to the access information from the first access node. In this embodiment of the present disclosure, the second access node may receive the first access node in a plurality of manners, which is described below.

In an optional implementation, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access. In this case, the second access node receives, based on the access resource information of the second access node, first access information from the first access node, wherein the first access information includes at least one of the access identifier, a node type, a node identifier, and synchronization information of the first access node. Then, the second access node establishes a connection with the first access node based on the access information, and transmits the first access acknowledgement information to the first access node based on the access resource information of the second access node. The first access acknowledgement information may carry at least one of following information: the access identifier and a node identifier of the first access node.

In another optional implementation, the second access node may receive a reference signal that is transmitted from the first access node and that carries first information, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node. Then, the second access node establishes a connection with the first access node based on the second access information, and transmits a reference signal carrying the second access acknowledgement information. The second access acknowledgement information may carry a node identifier of the first access node.

In this embodiment of the present disclosure, the second access node may further receive scheduling request information from the first access node, and transmit scheduling request acknowledgement information to the first access node, wherein the scheduling request information is used to request scheduling resources to transmit data and/or signaling, and the scheduling request acknowledgement information is used to indicate scheduling resources for transmitting the data and/or signaling. In this embodiment of the present disclosure, the second access node may schedule the first access node in a plurality of manners, which is illustrated below.

In an optional implementation, the resource information of the second access node includes scheduling request resource information for transmitting scheduling request information and scheduling request acknowledgement information. In this case, the second access node receives the scheduling request information from the first access node based on the scheduling request resource information, and transmits the scheduling request acknowledgement information based on the scheduling request resource information.

In another optional implementation, the second access node receives scheduling request information from the first access node through a reference signal, and the second access node transmits scheduling request acknowledgement information through a reference signal.

In this embodiment of the present disclosure, in a case that the scheduling request acknowledgement information is transmitted by using the reference signal, the scheduling request acknowledgment information may be indicated in an explicit manner or an implicit manner, wherein the explicit manner is that the reference signal carries the scheduling request acknowledgment information; the implicit manner is that the reference signal carries a resource identifier and/or a scheduling identifier for receiving the scheduling request acknowledgment information, and when the implicit manner is used, the second access node further transmits the scheduling request acknowledgment information based on the resource identifier and/or the scheduling identifier for receiving the scheduling request acknowledgment information.

In the embodiments of the present disclosure, the scheduling request information may include at least one of following:
a scheduling type, including at least one of data and signaling;
a type of a service, including an index of a QoS of a data packet;
a size of the scheduling, including at least one of a size of the to-be-transmitted data packet and a size of the expected scheduling resource.

The technical solutions provided in the embodiments of the present disclosure may be applicable to various systems, especially 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), A Worldwide Interoperability for Microwave Access (Worldwide Interoperability for Microwave Access) system, a 5G New Radio (NR) system, and the like. The plurality of systems each include a terminal device and a network device. The system may further include a core network part, for example, an Evolved Packet System (EPS), a 5G system (5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, wherein the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA), The embodiment of the present disclosure is not limited in the embodiments of the present disclosure, but may also be an evolved network device in a Long Term Evolution (LTE) system, a 5G base station in a 5G Network Architecture (Next Generation System), a Home Evolved Node B, a Relay Node, a Femto, a Pico Base Station (Pico), etc. which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). According to the form and quantity of the root antenna combination, the MIMO transmission may be two-dimensional MIMO (2D-MIMO), three-dimensional MIMO (3D-MIMO), full dimension MIMO (full dimension MIMO), or massive MIMO (massive-MIMO), or may be diversity transmission, precoding transmission, beamforming transmission, or the like.

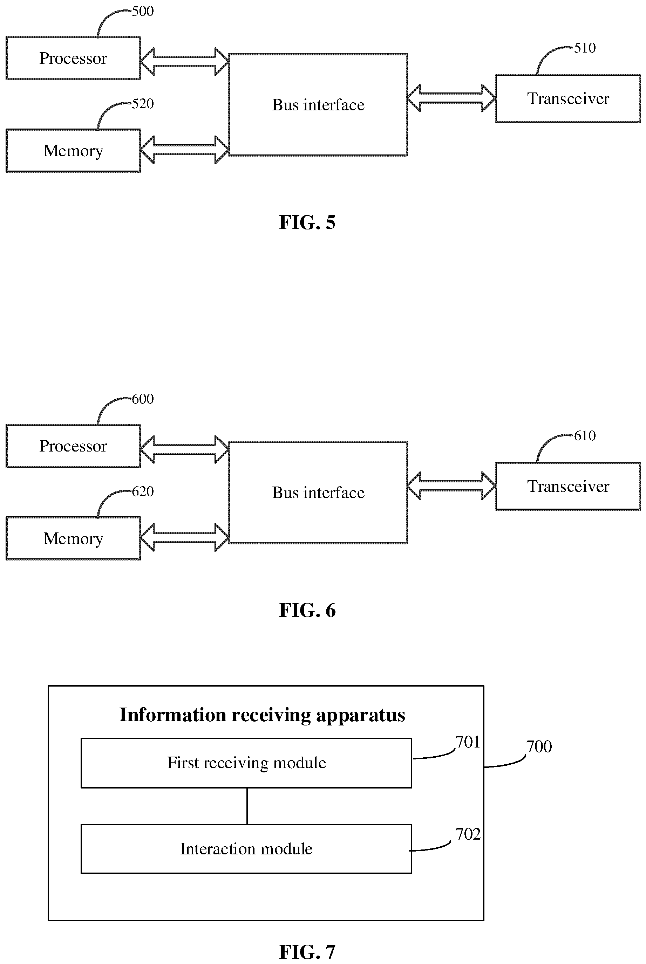

As shown in FIG. 5, an information receiving apparatus according to an embodiment of the present disclosure is applied to the first access node, and includes: a processor 500, configured to read a program in a memory 520 to perform the following processes: receiving a reference signal carrying second information from the second access node, wherein the second information includes a node identifier and node information of a second access node; interacting with the second access node based on the second information.

The transceiver 510 is configured to receive and transmit data under the control of the processor 500.

In FIG. 5, the bus architecture may include any number of interconnected buses and bridges, and specifically, various circuits of one or more processors represented by the processor 500 and a memory represented by the memory 520 are linked together. The bus architecture may also link various other circuits, such as a peripheral device, a voltage regulator, and a power management circuit, which are well known in the art, and therefore are not further described herein. The bus interface provides an interface. The transceiver 510 may be a plurality of elements, including a transmitter and a receiver, and provides a unit for communicating with various other apparatuses on a transmission medium. The processor 500 is responsible for managing the bus architecture and general processing, and the memory 520 may store data used by the processor 500 when performing operations.

The processor 500 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 500 is responsible for managing the bus architecture and general processing, and the memory 520 may store data used by the processor 500 when performing operations.

Optionally, the node information includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

Optionally, the processor 500 is further configured to read the program, and perform the following steps:
discovering the second access node based on the second information;
accessing the second access node based on the second information;
performing scheduling interaction with the second access node based on the second information.

Optionally, the processor 500 is further configured to read the program, and perform the following steps:
selecting, by the first access node, the second access node whose second information meets the first condition as the discovered second access node.

Optionally, the first condition includes at least one of following:
a node type of the second access node satisfies a first node type;
the service information of the second access node satisfies the first service information threshold;
the resource information of the second access node satisfies a first resource information threshold;
the transmit power of the second access node satisfies the first transmit power threshold;
a bandwidth configuration of the second access node satisfies a first bandwidth configuration threshold;
a communication mode of the second access node satisfies a first communication mode;
a type of a reference signal supported by the second access node satisfies a first reference signal type;
the multiple access mode of the second access node satisfies the first multiple access mode;
synchronization information of the second access node satisfies a first synchronization threshold;
timing information of the second access node satisfies a first timing threshold;
positioning information of the second access node satisfies a first positioning threshold;
The channel measurement information of the second access node satisfies the first measurement information threshold.

Optionally, the processor 500 is further configured to read the program, and perform the following steps: selecting the second access node whose second information meets a second condition as a target access node; accessing the target access node.

Optionally, the second condition includes at least one of following:
a node type of the second access node satisfies a second node type;
the service information of the second access node satisfies a second service information threshold;
the resource information of the second access node satisfies a second resource information threshold;
the transmit power of the second access node satisfies the second transmit power threshold;
a bandwidth configuration of the second access node meets a second bandwidth configuration threshold;
a communication mode of the second access node satisfies a second communication mode;
a type of a reference signal supported by the second access node satisfies a second reference signal type;
the multiple access mode of the second access node satisfies the second multiple access mode;
synchronization information of the second access node satisfies a second synchronization threshold;
timing information of the second access node satisfies a second timing threshold;
positioning information of the second access node satisfies a second positioning threshold;
the channel measurement information of the second access node satisfies the second measurement information threshold.

Optionally, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access.

Optionally, the processor 500 is further configured to read the program, and perform the following steps:
transmitting first access information of the first access node based on access resource information of the target access node, wherein the first access information includes at least one of the access identifier, a node type of the first access node, a node identifier, and synchronization information; receiving, based on the access resource information of the target access node, the first access acknowledgement information from the target access node.

Optionally, the processor 500 is further configured to read the program, and perform the following steps:
transmitting a reference signal carrying first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node; receiving a reference signal carrying second access acknowledgement information from the target access node.

Optionally, the processor 500 is further configured to read the program, and perform the following steps:
transmitting scheduling request information and receiving scheduling request acknowledgement information by the first access node based on the second information, wherein the scheduling request information is used to request scheduling resources to transmit data and/or signaling, and the scheduling request acknowledgement information is used to indicate scheduling resources for transmitting the data and/or signaling.

Optionally, the resource information of the second access node includes scheduling request resource information for transmitting scheduling request information and scheduling request acknowledgement information;

The processor 500 is further configured to read the program, and perform the following steps:
obtaining scheduling request resource information from a reference signal transmitted from the second access node, and transmitting scheduling request information based on the obtained scheduling request resource information;
receiving, based on the obtained scheduling request resource information, the scheduling request acknowledgement information from the second access node.

Optionally, the processor 500 is further configured to read the program, and perform the following steps:
transmitting scheduling request information through a reference signal;
receiving scheduling request acknowledgement information from the second access node through the reference signal.

Optionally, the scheduling request acknowledgement information is indicated in an explicit manner or an implicit manner, wherein the explicit manner is that the reference signal carries the scheduling request acknowledgement information, and the implicit manner is that the reference signal carries a resource and/or a scheduling identifier for receiving scheduling request acknowledgement information,

In a case that the implicit manner is used, the processor 500 is further configured to read the program, and perform the following steps: receiving the scheduling request acknowledgement information according to the resource and/or the scheduling identifier for receiving the scheduling request acknowledgement information.

Optionally, the scheduling request information includes at least one of following:
a scheduling type, including at least one of data and signaling;
a type of a service, including an index of a QoS of a data packet;
a size of the scheduling, including at least one of a size of the to-be-transmitted data packet and a size of the expected scheduling resource.

Optionally, the reference signal includes: a reference signal based on a sequence, and/or a signaling-based reference signal.

Optionally, the composition content of the reference signal includes at least one piece of information and/or at least one stage of sequences.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 6, an information transmitting apparatus according to an embodiment of the present disclosure is applied to the second access node, and includes: a processor 600, configured to read a program in a memory 620 to perform the following processes:
transmitting a reference signal carrying second information, wherein the second information includes a node identifier and node information of the second access node.

The transceiver 610 is configured to receive and transmit data under the control of the processor 600.

In FIG. 6, the bus architecture may include any number of interconnected buses and bridges, and specifically, various circuits of one or more processors represented by the processor 600 and a memory represented by the memory 620 are linked together. The bus architecture may also link various other circuits, such as a peripheral device, a voltage regulator, and a power management circuit, which are well known in the art, and therefore are not further described herein. The bus interface provides an interface. The transceiver 610 may be a plurality of elements, including a transmitter and a receiver, and provides a unit for communicating with various other apparatuses on a transmission medium. The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA), or a complex programmable logic device (CPLD), and the processor may also adopt a multi-core architecture.

The processor 600 is responsible for managing the bus architecture and general processing, and the memory 620 may store data used by the processor 600 when performing operations.

Optionally, the node information includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

Optionally, the processor 600 is further configured to read the program, and perform the following steps:
performing access control on the first access node in response to access information from the first access node, wherein the access information includes at least one of a node type, a node identifier, and synchronization information of the first access node.

Optionally, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access;
The processor 600 is further configured to read the program, and perform the following steps:
receiving, based on access resource information of the second access node, first access information from the first access node, wherein the first access information includes at least one of the access identifier, a node type of the first access node, a node identifier, and synchronization information;
establishing a connection with the first access node based on the first access information, and transmitting the first access acknowledgement information to the first access node based on the access resource information of the second access node.

Optionally, the processor 600 is further configured to read the program, and perform the following steps:
receiving a reference signal carrying first information from the first access node, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node;
establishing a connection with the first access node based on the second access information, and transmitting a reference signal carrying the second access acknowledgement information.

Optionally, the processor 600 is further configured to read the program, and perform the following steps:
receiving scheduling request information from the first access node, and transmitting scheduling request acknowledgement information to the first access node, wherein the scheduling request information is used to request scheduling resources to transmit data and/or signaling, and the scheduling request acknowledgement information is used to indicate scheduling resources for transmitting the data and/or signaling.

Optionally, the resource information of the second access node includes scheduling request resource information for transmitting scheduling request information and scheduling request acknowledgement information;

The processor 600 is further configured to read the program, and perform the following steps:
receiving, based on the scheduling request resource information, scheduling request information from the first access node, and transmitting, by the second access node, scheduling request acknowledgement information based on the scheduling request resource information.

Optionally, the processor 600 is further configured to read the program, and perform the following steps:
receiving, by the second access node, scheduling request information from the first access node through a reference signal, and transmitting, by the second access node, scheduling request acknowledgement information through a reference signal.

Optionally, the scheduling request acknowledgement information is indicated in an explicit manner or an implicit manner, wherein the explicit manner is that the reference signal carries the scheduling request acknowledgement information; the implicit manner is that the reference signal carries a resource and/or a scheduling identifier for receiving the scheduling request acknowledgment information, and when the implicit manner is used, the processor 600 is further configured to read the program, and perform the following steps: transmitting the scheduling request acknowledgment information based on the resource and/or scheduling identifier for receiving the scheduling request acknowledgment information.

Optionally, the scheduling request information includes at least one of following:
a scheduling type, including at least one of data and signaling;
a type of a service, including an index of a QoS of a data packet;
a size of the scheduling, including at least one of a size of the to-be-transmitted data packet and a size of the expected scheduling resource.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 7, an information receiving apparatus 700 provided in an embodiment of the present disclosure is applied to the first access node, and includes:
a first receiving module 701, configured to receive a reference signal carrying second information from the second access node, wherein the second information includes a node identifier and node information of a second access node;
an interaction module 702, configured to interact with the second access node based on the second information.

Optionally, the node information includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

Optionally, the interaction module is further configured to, when interacting with the second access node based on the second information, perform at least one of following:
discovering the second access node based on the second information;
accessing the second access node based on the second information;
performing scheduling interaction with the second access node based on the second information.

Optionally, the interaction module includes:
a discovery unit, configured to select the second access node whose second information meets a first condition as a discovered second access node.

Optionally, the first condition includes at least one of following:
a node type of the second access node satisfies a first node type;
the service information of the second access node satisfies the first service information threshold;
the resource information of the second access node satisfies a first resource information threshold;
the transmit power of the second access node satisfies the first transmit power threshold;
a bandwidth configuration of the second access node satisfies a first bandwidth configuration threshold;
a communication mode of the second access node satisfies a first communication mode;
a type of a reference signal supported by the second access node satisfies a first reference signal type;
the multiple access mode of the second access node satisfies the first multiple access mode;
synchronization information of the second access node satisfies a first synchronization threshold;
timing information of the second access node satisfies a first timing threshold;
positioning information of the second access node satisfies a first positioning threshold;
the channel measurement information of the second access node satisfies the first measurement information threshold.

Optionally, the interaction module includes:
an access unit, configured to select the second access node whose second information meets a second condition as a target access node; access the target access node.

Optionally, the second condition includes at least one of following:
a node type of the second access node satisfies a second node type;
the service information of the second access node satisfies a second service information threshold;
the resource information of the second access node satisfies a second resource information threshold;
the transmit power of the second access node satisfies the second transmit power threshold;
the bandwidth configuration of the second access node satisfies a second bandwidth configuration threshold;
a communication mode of the second access node satisfies a second communication mode;
a type of a reference signal supported by the second access node satisfies a second reference signal type;
the multiple access mode of the second access node satisfies the second multiple access mode;
synchronization information of the second access node satisfies a second synchronization threshold;
timing information of the second access node satisfies a second timing threshold;
positioning information of the second access node satisfies a second positioning threshold;
the channel measurement information of the second access node satisfies the second measurement information threshold.

Optionally, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access;
the access unit is further configured to transmit first access information of the first access node based on access resource information of the target access node, wherein the first access information includes at least one of the access identifier, a node type of the first access node, a node identifier, and synchronization information; receiving, based on the access resource information of the target access node, first access acknowledgement information from the target access node.

Optionally, the access unit is further configured to transmit a reference signal carrying first information, wherein the first information includes at least one of a node identifier, request information, and second access information of the first access node, and the request information includes at least one of access request information, monitoring request information, discovery request information, and scheduling request information, and the second access information includes at least one of a node type, a node identifier, and synchronization information of the first access node; receive a reference signal carrying second access acknowledgement information from the target access node.

Optionally, the interaction module includes: a scheduling processing unit, configured to transmit scheduling request information and receive scheduling request acknowledgement information based on the second information, wherein the scheduling request information is used to request scheduling resources to transmit data and/or signaling, and the scheduling request acknowledgement information is used to indicate scheduling resources for transmitting the data and/or signaling.

Optionally, the resource information of the second access node includes scheduling request resource information for transmitting scheduling request information and scheduling request acknowledgement information; the scheduling processing unit is further configured to obtain scheduling request resource information from a reference signal from the second access node, and transmit scheduling request information based on the obtained scheduling request resource information; receive scheduling request acknowledgement information from the second access node based on the obtained scheduling request resource information.

Optionally, the scheduling processing unit is further configured to transmit scheduling request information through the reference signal; receive scheduling request acknowledgement information from the second access node through the reference signal.

Optionally, the scheduling request acknowledgement information is indicated in an explicit manner or an implicit manner, wherein the explicit manner is that the reference signal carries the scheduling request acknowledgement information; the implicit manner is that the reference signal carries a resource and/or a scheduling identifier for receiving scheduling request acknowledgment information, and the scheduling processing unit is further configured to receive the scheduling request acknowledgment information according to the resource and/or the scheduling identifier for receiving the scheduling request acknowledgment information when the scheduling request acknowledgment information is indicated in an implicit manner.

Optionally, the scheduling request information includes at least one of following:
a scheduling type, including at least one of data and signaling;
a type of a service, including an index of a QoS of a data packet;
a size of the scheduling, including at least one of a size of the to-be-transmitted data packet and a size of the expected scheduling resource.

Optionally, the reference signal includes: a reference signal based on a sequence, and/or a signaling-based reference signal. The sequence may include at least one of following: a random sequence, a pseudo-random sequence, and a computer sequence.

Optionally, the composition content of the reference signal includes at least one piece of information and/or at least one stage of sequences.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

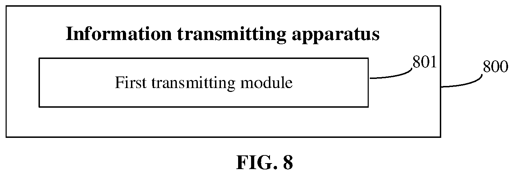

As shown in FIG. 8, an information transmitting apparatus 800 provided in an embodiment of the present disclosure is applied to the second access node, and includes:
a first receiving module 801, configured to receive a reference signal carrying second information from the second access node, wherein the second information includes a node identifier and node information of a second access node;
an interaction module, configured to interact with the second access node based on the second information.

Optionally, the node information includes at least one of following: the node type of the second access node, the service information of the second access node, the resource information of the second access node, the transmit power of the second access node, the bandwidth configuration of the second access node, the communication mode of the second access node, the type of the reference signal supported by the second access node, the multiple access mode of the second access node, the synchronization information of the second access node, the timing information of the second access node, the positioning information of the second access node, and the channel measurement information of the second access node.

Optionally, the apparatus further includes:
an access processing unit, configured to perform access control on the first access node in response to access information from the first access node, wherein the access information includes at least one of a node type, a node identifier, and synchronization information of the first access node.

Optionally, the resource information of the second access node includes access resource information for transmitting access information and access acknowledgement information, and the access resource information includes at least one of following: time domain resource information of initiating the random access, frequency domain resource information of initiating the random access, spatial domain resource information of initiating the random access, code domain resource information of initiating the random access, and an access identifier of initiating the random access;

The access processing unit is further configured to receive, based on access resource information of the second access node, first access information from the first access node, wherein the first access information includes at least one of the access identifier, a node type of the first access node, a node identifier, and synchronization information; establish a connection with the first access node based on the first access information, and transmit the first access acknowledgement information to the first access node based on the access resource information of the second access node.

Optionally, the access processing unit is further configured to receive a reference signal carrying first information from the first access node, wherein the first information includes at least one of a node identifier, request information, second access information, and an access identifier of the first access node, and the request information includes at least one of access request information, monitoring request information, discovery request information, and scheduling request information, and the second access information includes at least one of a node type, a node identifier, and synchronization information of the first access node; establish a connection with the first access node based on the second access information, and transmit a reference signal carrying the second access acknowledgement information.

Optionally, the apparatus further includes:
a scheduling unit, configured to receive scheduling request information from the first access node, and transmit scheduling request acknowledgement information to the first access node, wherein the scheduling request information is used to request scheduling resources to transmit data and/or signaling, and the scheduling request acknowledgement information is used to indicate scheduling resources for transmitting the data and/or signaling.

Optionally, the resource information of the second access node includes scheduling request resource information for transmitting scheduling request information and scheduling request acknowledgement information;
The scheduling unit is further configured to receive, based on the scheduling request resource information, scheduling request information from the first access node, and transmit, by the second access node, scheduling request acknowledgement information based on the scheduling request resource information.

Optionally, the scheduling unit is further configured to receive scheduling request information from the first access node through a reference signal, and transmit, by the second access node, scheduling request acknowledgement information through a reference signal.

Optionally, the scheduling request acknowledgement information is indicated in an explicit manner or an implicit manner, wherein the explicit manner is that the reference signal carries the scheduling request acknowledgement information; the implicit manner is that the reference signal carries a resource and/or a scheduling identifier for receiving the scheduling request acknowledgment information, and when the implicit manner is used, the scheduling unit further transmits the scheduling request acknowledgment information based on the resource and/or the scheduling identifier for receiving the scheduling request acknowledgment information.

Optionally, the scheduling request information includes at least one of following:
a scheduling type, including at least one of data and signaling;
a type of a service, including an index of a QoS of a data packet;
a size of the scheduling, including at least one of a size of the to-be-transmitted data packet and a size of the expected scheduling resource.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solution of the present disclosure essentially or all or part of the technical solution that contributes to the prior art may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, wherein a program is stored on a readable storage medium, and when the program is executed by a processor, each process of the foregoing method embodiments is implemented, and the same technical effect can be achieved. The readable storage medium may be any usable medium or data storage device accessible by the processor, including but not limited to a magnetic memory (for example, a floppy disk, a hard disk, a magnetic tape, a magneto-optical disk (MO), etc.), an optical memory (for example, a CD, a DVD, a BD, an HVD, etc.), and a semiconductor memory (for example, a ROM, an EPROM, an EEPROM, a non-volatile memory (NAND Flash), a solid state disk (SSD)), and the like.

It should be noted that, in this specification, the terms "include", "include", or any other variant thereof are intended to cover non-exclusive inclusion, so that a process, method, article, or apparatus that includes a series of elements includes not only those elements, but also other elements that are not explicitly listed, or elements inherent to the process, method, article, or apparatus. In the absence of more restrictions, the statement "includes one" does not exclude that there are additional identical elements in the process, method, article, or apparatus that includes the element.

Through the description of the foregoing implementations, a person skilled in the art may clearly understand that the method in the foregoing embodiments may be implemented by means of software plus a necessary general hardware platform, and certainly may also be implemented by hardware, but in many cases, the former is a better implementation. According to such an understanding, the technical solution of the present disclosure essentially or the part contributing to the prior art may be embodied in the form of a software product, and the computer software product is stored in a storage medium (such as a ROM/RAM, a magnetic disk, and an optical disk), and includes several instructions for enabling a terminal (which may be a mobile phone, a computer, a server, an air conditioner, a network device, etc.) to perform the method according to the embodiments of the present disclosure.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

The embodiments of the present disclosure are described above with reference to the accompanying drawings, but the present disclosure is not limited to the specific embodiments described above, and the specific embodiments described above are merely illustrative, rather than limiting, and a person of ordinary skill in the art can make many forms without departing from the spirit of the present disclosure and the scope of the claims, all of which are within the protection scope of the present disclosure.

## Claims

1. An information receiving method for an access node, comprising:
receiving, by a first access node, a reference signal carrying second information from the second access node, wherein the second information comprises a node identifier and node information of the second access node;
interacting with the second access node by the first access node based on the second information.

2. The method according to claim 1, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

3. The method according to claim 2, wherein interacting with the second access node by the first access node based on the second information comprises at least one of following:
discovering, by the first access node, the second access node based on the second information;
accessing, by the first access node, the second access node based on the second information; or
performing, by the first access node, scheduling interaction with the second access node based on the second information.

4. The method according to claim 3, wherein the discovering, by the first access node, the second access node based on the second information comprises:
selecting, by the first access node, the second access node whose second information meets a first condition as the discovered second access node.

5. The method according to claim 4, wherein the first condition comprises at least one of following:
that the node type of the second access node satisfies a first node type;
that the service information of the second access node satisfies a first service information threshold;
that the resource information of the second access node satisfies a first resource information threshold;
that the transmit power of the second access node satisfies a first transmit power threshold;
that the bandwidth configuration of the second access node satisfies a first bandwidth configuration threshold;
that the communication mode of the second access node satisfies a first communication mode;
that the type of the reference signal supported by the second access node satisfies a first reference signal type;
that the multiple access mode of the second access node satisfies a first multiple access mode;
that the synchronization information of the second access node satisfies a first synchronization threshold;
that the timing information of the second access node satisfies a first timing threshold;
that the positioning information of the second access node satisfies a first positioning threshold; or
that the channel measurement information of the second access node satisfies a first measurement information threshold.

6. The method according to claim 3, wherein the accessing, by the first access node, the second access node based on the second information comprises:
selecting, by the first access node, the second access node whose second information meets a second condition as a target access node;
accessing the target access node by the first access node.

7. The method according to claim 6, wherein the second condition comprises at least one of following:
that the node type of the second access node satisfies a second node type;
that the service information of the second access node satisfies a second service information threshold;
that the resource information of the second access node satisfies a second resource information threshold;
that the transmit power of the second access node satisfies a second transmit power threshold;
that the bandwidth configuration of the second access node meets a second bandwidth configuration threshold;
that the communication mode of the second access node satisfies a second communication mode;
that the type of a reference signal supported by the second access node satisfies a second reference signal type;
that the multiple access mode of the second access node satisfies a second multiple access mode;
that the synchronization information of the second access node satisfies a second synchronization threshold;
that the timing information of the second access node satisfies a second timing threshold;
that the positioning information of the second access node satisfies a second positioning threshold; or
that the channel measurement information of the second access node satisfies a second measurement information threshold.

8. The method according to claim 6, wherein
the resource information of the second access node comprises access resource information, and the access resource information comprises at least one of following:
time domain resource information of initiating random access, frequency domain resource information of initiating random access, spatial domain resource information of initiating random access, code domain resource information of initiating random access, or an access identifier of initiating the random access;
wherein accessing the target access node by the first access node comprises:
transmitting, by the first access node, first access information of the first access node based on access resource information of the target access node, wherein the first access information comprises at least one of the access identifier, a node type, a node identifier, or synchronization information of the first access node;
receiving, by the first access node, first access acknowledgement information from the target access node based on the access resource information of the target access node.

9. The method according to claim 6, wherein
the accessing the target access node by the first access node comprises:
transmitting, by the first access node, a reference signal carrying a first information, wherein the first information comprises at least one of a node identifier, request information, or second access information of the first access node, and the request information comprises at least one of access request information, monitoring request information, discovery request information, or scheduling request information, and the second access information comprises at least one of a node type, a node identifier, or synchronization information of the first access node;
receiving, by the first access node, a reference signal carrying second access acknowledgement information from the target access node.

10. The method according to claim 3, wherein the performing, by the first access node, scheduling interaction with the second access node based on the second information comprises:
transmitting, by the first access node, scheduling request information and receiving scheduling request acknowledgement information based on the second information.

11. The method according to claim 10, wherein
resource information of the second access node comprises: scheduling request resource information;
the transmitting, by the first access node, the scheduling request information and receiving the scheduling request acknowledgement information based on the second information comprises:
obtaining, by the first access node, scheduling request resource information from a reference signal from the second access node, and transmitting the scheduling request information based on the obtained scheduling request resource information;
receiving, by the first access node, the scheduling request acknowledgement information from the second access node based on the obtained scheduling request resource information.

12. The method according to claim 10, wherein the transmitting, by the first access node, scheduling request information and receiving scheduling request acknowledgement information based on the second information comprises:
transmitting, by the first access node, the scheduling request information through a reference signal;
receiving, by the first access node, the scheduling request acknowledgement information from the second access node through a reference signal.

13. The method according to claim 12, wherein
the scheduling request acknowledgment information is indicated in an explicit manner or an implicit manner, wherein the explicit manner is that the reference signal carries the scheduling request acknowledgment information; the implicit manner is that the reference signal carries a resource identifier and/or a scheduling identifier, and the first access node receives the scheduling request acknowledgment information according to the resource identifier and/or the scheduling identifier.

14. The method according to claim 10, wherein the scheduling request information comprises at least one of following:
a scheduling type, comprising at least one of data or signaling;
a type of a service, comprising an index of a QoS of a data packet; or
a size of scheduling, comprising at least one of a size of a to-be-transmitted data packet or a size of an expected scheduling resource.

15. An information transmitting method for an access node, comprising:
transmitting, by a second access node, a reference signal carrying second information, wherein the second information comprises a node identifier and node information of the second access node.

16. The method according to claim 15, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

17. The method according to claim 16, further comprising:
performing, by the second access node, access control on the first access node in response to access information from the first access node.

18. The method according to claim 17, wherein
the resource information of the second access node comprises access resource information, and the access resource information comprises at least one of following:
time domain resource information of initiating a random access, frequency domain resource information of initiating a random access, spatial domain resource information of initiating a random access, code domain resource information of initiating a random access, or an access identifier of initiating the random access;
the performing, by the second access node, access control on the first access node in response to the access information from the first access node comprises:
receiving, by the second access node, first access information from the first access node based on the access resource information of the second access node, wherein the first access information comprises at least one of an access identifier, a node type, a node identifier, or synchronization information of the first access node;
establishing, by the second access node, a connection with the first access node based on the first access information, and transmitting first access acknowledgement information to the first access node based on the access resource information of the second access node.

19. The method according to claim 17, wherein
the performing, by the second access node, access control on the first access node in response to the access information from the first access node comprises:
receiving, by the second access node, a reference signal carrying first information from the first access node, wherein the first information comprises at least one of a node identifier, request information, second access information, or an access identifier of the first access node, and the request information comprises at least one of access request information, monitoring request information, discovery request information, or scheduling request information, and the second access information comprises at least one of a node type, a node identifier, or synchronization information of the first access node;
establishing, by the second access node, a connection with the first access node based on the second access information, and transmitting a reference signal carrying second access acknowledgement information.

20. The method according to claim 16, further comprising:
receiving, by the second access node, scheduling request information from the first access node, and transmitting scheduling request acknowledgement information to the first access node.

21. The method according to claim 20, wherein
the resource information of the second access node comprises: scheduling request resource information;
the receiving, by the second access node, scheduling request information from the first access node, and transmitting scheduling request acknowledgement information to the first access node comprises:
receiving, by the second access node, scheduling request information from the first access node based on the scheduling request resource information, and transmitting, by the second access node, the scheduling request acknowledgement information based on the scheduling request resource information.

22. The method according to claim 20, wherein
the receiving, by the second access node, scheduling request information from the first access node, and transmitting scheduling request acknowledgement information to the first access node comprises:
receiving, by the second access node, the scheduling request information from the first access node through a reference signal, and transmitting, by the second access node, the scheduling request acknowledgement information through a reference signal.

23. The method according to claim 22, wherein
the scheduling request acknowledgment information is indicated in an explicit manner or an implicit manner, wherein the explicit manner is that the reference signal carries the scheduling request acknowledgment information; the implicit manner is that the reference signal carries a resource identifier and/or a scheduling identifier, and when the implicit manner is used, the second access node further transmits the scheduling request acknowledgment information based on the resource identifier and/or the scheduling identifier.

24. The method according to claim 20, wherein the scheduling request information comprises at least one of following:
a scheduling type, comprising at least one of data or signaling;
a type of a service, comprising an index of a QoS of a data packet; or
a size of scheduling, comprising at least one of a size of a to-be-transmitted data packet or a size of an expected scheduling resource.

25. An information receiving apparatus, applied to a first access node, comprising: a memory, a transceiver, and a processor,
wherein the memory is configured to store a computer program; the transceiver is configured to transmit and receive data under the control of the processor; the processor is configured to read the computer program in the memory and perform following operations:
receiving a reference signal carrying second information from a second access node, wherein the second information comprises a node identifier and node information of the second access node;
interacting with the second access node based on the second information.

26. The apparatus according to claim 25, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

27. The apparatus according to claim 26, wherein the processor is further configured to read the computer program in the memory and perform following operations:
discovering the second access node based on the second information;
accessing the second access node based on the second information;
performing scheduling interaction with the second access node based on the second information.

28. The apparatus according to claim 27, wherein the processor is further configured to read the computer program in the memory and perform following operations:
selecting the second access node whose second information meets a first condition as the discovered second access node.

29. The apparatus according to claim 27, wherein the processor is further configured to read the computer program in the memory and perform following operations:
selecting the second access node whose second information meets a second condition as a target access node;
accessing the target access node.

30. The apparatus according to claim 29, wherein
the resource information of the second access node comprises access resource information, and the access resource information comprises at least one of following: time domain resource information of initiating a random access, frequency domain resource information of initiating a random access, spatial domain resource information of initiating a random access, code domain resource information of initiating a random access, or an access identifier of initiating a random access;
the processor is further configured to read the computer program in the memory and perform following operations:
transmitting first access information of the first access node based on the access resource information of the target access node, wherein the first access information comprises at least one of an access identifier, a node type, a node identifier, or synchronization information of the first access node;
receiving first access acknowledgement information from the target access node based on the access resource information of the target access node.

31. The apparatus according to claim 29, wherein
the processor is further configured to read the computer program in the memory and perform following operations:
transmitting a reference signal carrying first information, wherein the first information comprises at least one of a node identifier, request information, and second access information of the first access node, or the request information comprises at least one of access request information, monitoring request information, discovery request information, or scheduling request information, and the second access information comprises at least one of a node type, a node identifier, or synchronization information of the first access node;
receiving a reference signal carrying second access acknowledgement information from the target access node.

32. The apparatus according to claim 27, wherein the processor is further configured to read the computer program in the memory and perform following operations:
transmitting scheduling request information and receiving scheduling request acknowledgement information based on the second information.

33. The apparatus according to claim 32, wherein
the resource information of the second access node comprises: scheduling request resource information;
the processor is further configured to read the computer program in the memory and perform following operations:
obtaining the scheduling request resource information from a reference signal from the second access node, and transmitting the scheduling request information based on the obtained scheduling request resource information;
receiving the scheduling request acknowledgement information from the second access node based on the obtained scheduling request resource information.

34. The apparatus according to claim 32, wherein the processor is further configured to read the computer program in the memory and perform following operations:
transmitting scheduling request information through a reference signal;
receiving scheduling request acknowledgement information from the second access node through a reference signal.

35. The apparatus according to claim 34, wherein
the scheduling request acknowledgement information is indicated in an explicit manner or an implicit manner, wherein the explicit manner is that the reference signal carries the scheduling request acknowledgement information, and the implicit manner is that the reference signal carries a resource identifier and/or a scheduling identifier;
in a case that the scheduling request acknowledgement information is indicated in the implicit manner, the processor is further configured to read the computer program in the memory and perform following operations:
receiving the scheduling request acknowledgement information based on the resource identifier and/or the scheduling identifier.

36. An information transmitting apparatus, comprising: a memory, a transceiver, and a processor:
wherein the memory is configured to store a computer program; the transceiver is configured to transmit and receive data under control of the processor; the processor is configured to read the computer program in the memory and perform following operations:
transmitting a reference signal carrying second information, wherein the second information comprises a node identifier and node information of the second access node.

37. The apparatus according to claim 36, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

38. The apparatus according to claim 37, wherein the processor is further configured to read the computer program in the memory and perform following operations:
performing access control on the first access node in response to access information from the first access node, wherein the access information comprises at least one of a node type, a node identifier, or synchronization information of the first access node.

39. The apparatus according to claim 38, wherein
the resource information of the second access node comprises access resource information, and the access resource information comprises at least one of following: time domain resource information of initiating a random access, frequency domain resource information of initiating a random access, spatial domain resource information of initiating a random access, code domain resource information of initiating a random access, or an access identifier of initiating a random access;
the processor is further configured to read the computer program in the memory and perform following operations:
receiving first access information from the first access node based on access resource information of the second access node, wherein the first access information comprises at least one of an access identifier, a node type, a node identifier, or synchronization information of the first access node;
establishing a connection with the first access node based on the first access information, and transmitting first access acknowledgement information to the first access node based on the access resource information of the second access node.

40. The apparatus according to claim 38, wherein
the processor is further configured to read the computer program in the memory and perform following operations:
receiving a reference signal carrying first information from the first access node, wherein the first information comprises at least one of a node identifier, request information, second access information, or an access identifier of the first access node, and the request information comprises at least one of access request information, monitoring request information, discovery request information, or scheduling request information, and the second access information comprises at least one of a node type, a node identifier, or synchronization information of the first access node;
establishing a connection with the first access node based on the second access information, and transmitting a reference signal carrying second access acknowledgement information.

41. The apparatus according to claim 37, wherein the processor is further configured to read the computer program in the memory and perform following operations:
receiving scheduling request information from the first access node, and transmitting scheduling request acknowledgement information to the first access node.

42. The apparatus according to claim 41, wherein
the resource information of the second access node comprises: scheduling request resource information;
the processor is further configured to read the computer program in the memory and perform following operations:
receiving scheduling request information from the first access node based on the scheduling request resource information, and transmitting the scheduling request acknowledgement information based on the scheduling request resource information.

43. The apparatus according to claim 41, wherein
the processor is further configured to read the computer program in the memory and perform following operations:
receiving the scheduling request information from the first access node through a reference signal, and transmitting the scheduling request acknowledgement information through a reference signal.

44. The apparatus according to claim 43, wherein
the scheduling request acknowledgement information is indicated in an explicit manner or an implicit manner, wherein the explicit manner is that the reference signal carries the scheduling request acknowledgement information; the implicit manner is that the reference signal carries a resource identifier and/or a scheduling identifier, and when the implicit manner is used, the processor is further configured to read the computer program in the memory and perform following operations:
transmitting the scheduling request acknowledgement information based on the resource identifier and/or the scheduling identifier.

45. An information receiving apparatus applied to a first access node, comprising:
a first receiving module, configured to receive a reference signal carrying second information from a second access node, wherein the second information comprises a node identifier and node information of the second access node;
an interaction module, configured to interact with the second access node based on the second information.

46. The apparatus according to claim 45, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

47. The apparatus according to claim 46, wherein the interaction module is further configured to, when interacting with the second access node based on the second information, perform at least one of following:
discovering the second access node based on the second information;
accessing the second access node based on the second information; or
performing scheduling interaction with the second access node based on the second information.

48. The apparatus according to claim 47, wherein the interaction module comprises:
a discovery unit, configured to select the second access node whose second information meets a first condition as the discovered second access node.

49. The apparatus according to claim 48, wherein the first condition comprises at least one of following:
that the node type of the second access node satisfies a first node type;
that the service information of the second access node satisfies a first service information threshold;
that the resource information of the second access node satisfies a first resource information threshold;
that the transmit power of the second access node satisfies a first transmit power threshold;
that the bandwidth configuration of the second access node satisfies a first bandwidth configuration threshold;
that the communication mode of the second access node satisfies a first communication mode;
that the type of the reference signal supported by the second access node satisfies a first reference signal type;
that the multiple access mode of the second access node satisfies a first multiple access mode;
that the synchronization information of the second access node satisfies a first synchronization threshold;
that the timing information of the second access node satisfies a first timing threshold;
that the positioning information of the second access node satisfies a first positioning threshold; or
that the channel measurement information of the second access node satisfies a first measurement information threshold.

50. The apparatus according to claim 47, wherein the interaction module comprises:
an access unit, configured to select the second access node whose second information meets a second condition as a target access node; access the target access node.

51. The apparatus according to claim 50, wherein the second condition comprises at least one of following:
that the node type of the second access node satisfies a second node type;
that the service information of the second access node satisfies a second service information threshold;
that the resource information of the second access node satisfies a second resource information threshold;
that the transmit power of the second access node satisfies a second transmit power threshold;
that the bandwidth configuration of the second access node meets a second bandwidth configuration threshold;
that the communication mode of the second access node satisfies a second communication mode;
that the type of the reference signal supported by the second access node satisfies a second reference signal type;
that the multiple access mode of the second access node satisfies a second multiple access mode;
that synchronization information of the second access node satisfies a second synchronization threshold;
that timing information of the second access node satisfies a second timing threshold;
that the positioning information of the second access node satisfies a second positioning threshold; or
that the channel measurement information of the second access node satisfies a second measurement information threshold.

52. The apparatus according to claim 50, wherein the resource information of the second access node comprises access resource information for transmitting access information and access acknowledgement information, and the access resource information comprises at least one of following: time domain resource information of initiating a random access, frequency domain resource information of initiating a random access, spatial domain resource information of initiating a random access, code domain resource information of initiating a random access, or an access identifier of initiating a random access;
the access unit is further configured to transmit first access information of the first access node based on the access resource information of the target access node, wherein the first access information comprises at least one of an access identifier, a node type, a node identifier, or synchronization information of the first access node; and to receive first access acknowledgement information from the target access node based on the access resource information of the target access node.

53. The apparatus according to claim 50, wherein the access unit is further configured to transmit a reference signal carrying first information, wherein the first information comprises at least one of a node identifier, request information, and second access information of the first access node, or the request information comprises at least one of access request information, monitoring request information, discovery request information, or scheduling request information, and the second access information comprises at least one of a node type, a node identifier, or synchronization information of the first access node; and to receive a reference signal carrying second access acknowledgement information from the target access node.

54. The apparatus according to claim 47, wherein the interaction module comprises:
a scheduling processing unit, configured to transmit scheduling request information and receive scheduling request acknowledgement information based on the second information, wherein the scheduling request information is configured to request a scheduling resource to transmit data and/or signaling, and the scheduling request acknowledgement information is configured to indicate the scheduling resource for transmitting the data and/or the signaling.

55. The apparatus according to claim 54, wherein the resource information of the second access node comprises scheduling request resource information for transmitting scheduling request information and scheduling request acknowledgement information; the scheduling processing unit is further configured to obtain scheduling request resource information from a reference signal from the second access node, and transmit the scheduling request information based on the obtained scheduling request resource information; and receive the scheduling request acknowledgement information from the second access node based on the obtained scheduling request resource information.

56. The apparatus according to claim 54, wherein the scheduling processing unit is further configured to transmit the scheduling request information through a reference signal; receive the scheduling request acknowledgement information from the second access node through a reference signal.

57. The apparatus according to claim 56, wherein the scheduling request acknowledgement information is indicated in an explicit manner or an implicit manner, and the explicit manner is that the reference signal carries the scheduling request acknowledgement information; the implicit manner is that the reference signal carries a resource identifier and/or a scheduling identifier for receiving the scheduling request acknowledgment information, and the scheduling processing unit is further configured to receive the scheduling request acknowledgment information based on the resource identifier and/or the scheduling identifier for receiving the scheduling request acknowledgment information when the scheduling request acknowledgment information is indicated in the implicit manner.

58. The apparatus according to claim 54, wherein the scheduling request information comprises at least one of following:
a type of scheduling, comprising at least one of data or signaling;
a type of a service, comprising an index of a QoS of a data packet; or
a size of scheduling, comprising at least one of a size of a to-be-transmitted data packet or a size of an expected scheduling resource.

59. An information transmitting apparatus applied to a second access node, comprising:
a transmitting module, configured to transmit a reference signal carrying second information, wherein the second information comprises a node identifier and node information of the second access node.

60. The apparatus according to claim 59, wherein the node information comprises at least one of following:
a node type of the second access node, service information of the second access node, resource information of the second access node, a transmit power of the second access node, a bandwidth configuration of the second access node, a communication mode of the second access node, a type of a reference signal supported by the second access node, a multiple access mode of the second access node, synchronization information of the second access node, timing information of the second access node, positioning information of the second access node, or channel measurement information of the second access node.

61. The apparatus according to claim 60, wherein the apparatus further comprises:
an access processing unit, configured to perform access control on the first access node in response to access information from the first access node, wherein the access information comprises at least one of a node type, a node identifier, or synchronization information of the first access node.

62. The apparatus according to claim 61, wherein the resource information of the second access node comprises access resource information for transmitting access information and access acknowledgement information, and the access resource information comprises at least one of following: time domain resource information of initiating a random access, frequency domain resource information of initiating a random access, spatial domain resource information of initiating a random access, code domain resource information of initiating a random access, or an access identifier of initiating a random access;
the access processing unit is further configured to receive first access information from the first access node based on access resource information of the second access node, wherein the first access information comprises at least one of the access identifier, a node type, a node identifier, or synchronization information of the first access node; establish a connection with the first access node based on the first access information, and transmit first access acknowledgement information to the first access node based on the access resource information of the second access node.

63. The apparatus according to claim 61, wherein the access processing unit is further configured to receive a reference signal carrying first information from the first access node, wherein the first information comprises at least one of a node identifier, request information, second access information, or an access identifier of the first access node, and the request information comprises at least one of access request information, monitoring request information, discovery request information, or scheduling request information, and the second access information comprises at least one of a node type, a node identifier, or synchronization information of the first access node; establish a connection with the first access node based on the second access information, and transmit a reference signal carrying second access acknowledgement information.

64. The apparatus according to claim 60, wherein the apparatus further comprises:
a scheduling unit, configured to receive scheduling request information from the first access node, and transmit scheduling request acknowledgement information to the first access node, wherein the scheduling request information is configured to request a scheduling resource for transmitting data and/or signaling, and the scheduling request acknowledgement information is configured to indicate the scheduling resource for transmitting the data and/or the signaling.

65. The apparatus according to claim 64, wherein the resource information of the second access node comprises: scheduling request resource information for transmitting scheduling request information and scheduling request acknowledgement information;
the scheduling unit is further configured to receive the scheduling request information from the first access node based on the scheduling request resource information, and transmit, by the second access node, the scheduling request acknowledgement information based on the scheduling request resource information.

66. The apparatus according to claim 64, wherein the scheduling unit is further configured to receive scheduling request information from the first access node, and transmit, by the second access node, scheduling request acknowledgement information through a reference signal.

67. The apparatus according to claim 66, wherein the scheduling request acknowledgement information is indicated in an explicit manner or an implicit manner, and the explicit manner is that the reference signal carries the scheduling request acknowledgement information; the implicit manner is that the reference signal carries a resource identifier and/or a scheduling identifier for receiving the scheduling request acknowledgment information, and when the implicit manner is used, the scheduling unit further transmits the scheduling request acknowledgment information based on the resource identifier and/or the scheduling identifier for receiving the scheduling request acknowledgment information.

68. The apparatus according to claim 64, wherein the scheduling request information comprises at least one of following:
a type of scheduling, comprising at least one of data or signaling;
a type of a service, comprising an index of a QoS of a data packet; or
a size of scheduling, comprising at least one of a size of a to-be-transmitted data packet or a size of an expected scheduling resource.

69. A processor-readable storage medium, wherein the processor-readable storage medium stores a computer program, and the computer program is configured to cause a processor to perform the method according to any one of claims 1 to 24.
